# EUROPEAN PATENT APPLICATION

(11) **EP 2 634 389 A1**
(43) Date of publication of application: **04.09.2013**
(21) Application number: 12157282.0
(22) Date of filing: 28.02.2012
(51) Int. Cl.: F02B 1/12, F02D 41/00, F02D 41/30

(54) **Self ignition operation of alternative fuel internal combustion engines**

(71) Applicant: Caterpillar Motoren GmbH & Co. KG, 24159 Kiel (DE)
(72) Inventor: von der Osten-Sack, Andreas, 24145 Kiel (DE); Reeh, Jens-Uwe, 24220 Flintbek (DE); Schlemmer-Kelling, Udo, 24113 Molfsee (DE)
(74) Representative: Kramer - Barske - Schmidtchen

(57) **Abstract**

A method for operating a self ignition internal combustion engine (ICE) with a low cetane fuel such as alternative fuels, for example pyrolysis oil, as well as an ICE are disclosed. To reach self ignition conditions one may provide the internal combustion engine to have a compression ratio of at least 17:1, for example, 18:1 (step 100). Moreover, one may load a combustion chamber of the internal combustion engine with charge air having a minimal temperature in the range of 340 K to 360 K (step 200) and inject the low cetane fuel at an injection angle of a piston of the internal combustion engine within the range of 20° to 10°, for example between 17,5° to 11° prior top dead center into the charge air (step 300), thereby forming a low cetane fuel - charge air mixture. Compressing the low cetane fuel - charge air mixture further during the combustion cycle may result in a compression end temperature of at least 1000 K, allowing self ignition of the low cetane fuel.

## Description

### Technical Field

The present disclosure generally refers to internal combustion engines (ICEs) with alternative fuels and more particularly to a self ignition operation of those ICEs.

### Background

Alternative fuels replacing crude oil based fuels are the subject of ongoing interest, in particular with respect to the replacement of crude oil based fuels such as diesel fuel, light fuel oil (LFO), and heavy fuel oil (HFO). Alternative fuels include first generation bio-fuels (e.g. palm oil, rapeseed oil, canola oil, oils based on animal fat) and second generation bio-fuels (e.g. oils made of non food corps, i.e. waste biomass).

Examples of second generation bio-fuel include "pyrolysis oils" obtained from the pyrolysis of, e.g., wood or agricultural wastes, such as the stalks of wheat or corn, grass, wood, wood shavings, grapes, and sugar cane. In general, pyrolysis oil is predominantly produced by the "Fast Pyrolysis" technology, which comprises rapid pyrolysation of biomass in a fluidized bubbling sand bed reactor, wherein the solid heat-carrying medium is circulated and, therefore, the residence time of solids is well-controlled and high heating rates (up to 1000 °C/second) are obtained.

The chemical composition and the physical properties of alternative fuels such as pyrolysis oils can differ significantly from those of crude oil based fuel, for example, diesel, LFO, and HFO, in particular with respect to the high content of water and oxygen, resulting in a rather low heating value and reduced ignition properties. Often, alternative fuels may have a low-cetane value. For example, pyrolysis oil may have cetane values in the range of 4 to 15, which mainly affects the self ignition properties. In comparison, crude oil based fuels may have high cetane values, for example, diesel: 48-58, LFO: 40-52, and HFO: 28-41.

In summary, the use of alternative fuels requires an adaptation of ICEs, in particular for large ICEs operated at medium speed, to those specific features of alternative fuels and.

The use of alternative fuels in internal combustion engines affects in particular the type of operation due to the low kinetics of the fuel. For pyrolysis oil based fuels, the low kinetic may in part be directly related to the high water content, the cetane number, and the long molecular chains inside of the pyrolysis oil.

Various approaches to ignite pyrolysis oils were suggested. For example, GB 2 349 175 A discloses a pyrolysis oils operated engine using an oxygen enriched atmosphere. Moreover, the use of an ignition injection were tested, see, for example, "EVALUATION OF COMPLEMENTARY TECHNOLOGIES TO REDUCE BIO ENGINE EMISSIONS" by Eur Ing J H Blowes, ETSU B/T1/00761/00/REP, URN 02/1437, September 2003 and "POWER GENERATION USING FAST PYROLYSIS LIQUIDS FROM BIOMASS" by D. Chiaramonti et. al., Renewable and Sustainable Energy Reviews, 2005 Elsevier.

For a diesel engine, systems for injecting fuel at modified times are disclosed, for example, in EP 1 273 795 B1 and EP 2 136 054 A1. Those systems are based on a camshaft as a means of adjusting the start of fuel delivery between early and late start times.

The present disclosure is directed, at least in part, to improving or overcoming one or more aspects of the related prior art and particularly to provide a nozzle system for use with alternative fuels.

### Summary of the Disclosure

According to an aspect of the present disclosure, a method for operating a self ignition internal combustion engine with a low cetane fuel may comprise providing an internal combustion engine having a compression ratio of at least 17:1, for example, 18:1, loading a combustion chamber of the internal combustion engine with charge air having a minimal temperature in the range of 340 K to 360 K, injecting the low cetane fuel at an injection angle of a piston of the internal combustion engine within the range of 20° to 10° prior top dead center into the charge air, thereby forming a low cetane fuel - charge air mixture, and compressing the low cetane fuel - charge air mixture further to reach a compression end temperature of at least 1000 K, thereby allowing self ignition of the low cetane fuel.

In another aspect, a method of switching to operating a self ignition internal combustion engine with a low cetane fuel may comprise operating the internal combustion engine with a crude oil based fuel and respective settings for cooling and injection timing, switching to and operating the internal combustion engine with a switch over fuel and respective settings for cooling and injection timing, until the internal combustion engine may be cleaned from crude oil based fuel residue, and then switching to and operating the internal combustion engine with the low cetane fuel according to the above mentioned method.

In another aspect, a self-ignition internal combustion engine for operation with a low cetane fuel, the self-ignition internal combustion engine may comprise a cylinder unit with a piston delimiting a combustion chamber that, during an operation cycle of the piston, is reduced in size by a compression ratio of at least 17:1, for example, 18:1, an air system configured for loading the combustion chamber with charge air having a minimal temperature of at least 350 K, and an injection system configured for injecting the low cetane fuel at an injection angle of the piston within the range of 20° to 10° for example, between 17,5° and 11° such as 16° prior top dead center, thereby forming a low cetane fuel - charge air mixture within the combustion chamber, wherein, during operation of the elf-ignition internal combustion engine, a self-ignition compression end temperature of at least 1000 K for the low cetane fuel - charge air mixture is provided

In some embodiments, the injection angle may be set within the range of 20° to 10°, for example within the range of 17,5° to 11° such as at an angle of 17°, 16°, and 15°, for example, using an early position setting of an injection system based on a flexible camshaft technique or common rail technique.

In some embodiments, the piston may delimit the combustion chamber and a method may further comprise oscillating the piston such that the combustion chamber, during a compression cycle of the internal combustion engine, is reduced in size by a compression ratio of at least 17:1, for example, 18:1.

Other features and aspects of this disclosure will be apparent from the following description and the accompanying drawings.

### Brief Description of the Drawings

Fig. 1 shows a schematic block diagram of an internal combustion engine system; and
Fig. 2 is a flowchart illustrating the self ignition operation of an ICE.

### Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The present disclosure may be based in part on the realization that a self ignitable atmosphere for alternative fuels, in particular pyrolysis oil, applications may be based on a combustion end temperature above 1000 K, for example, in the range between 1100 K and 1200 K. Such a combustion end temperature may be reached by a) increasing the compression ratio (for example, epsilon value increased to 18) relative to conventional diesel engines (large diesel engines have an epsilon value of 16), b) adjusting the charge air system to provide an increased charge air temperature, and c) injecting the pyrolysis oil earlier than crude oil based fuels such as HFO/diesel, for example, at an injection piston angle within the range of 20° to 10°, for example, between 17,5° and 11° prior top dead center.

Providing an ICE operable under those conditions, may allow operating the ICE with crude oil based fuels as well as alternative fuels such as pyrolysis oil and may allow moreover switching between crude oil based fuels and alternative fuels during continuous operation of the ICE.

Such a switching between fuels may be based on a switching fuel as disclosed, for example, in the application "ETHANOL-BASED FUEL AND USE THEREOF" filed on the same day by Caterpillar Motoren GmbG & Co. KG. Moreover, details of a system into which such an ICE may be incorporated are disclosed, for example, in the application "OPERATING A POWER PLANT WITH ALTERNATIVE FUELS" filed on the same day by Caterpillar Motoren GmbH & Co. KG. The contents of those applications are herein incorporated by reference.

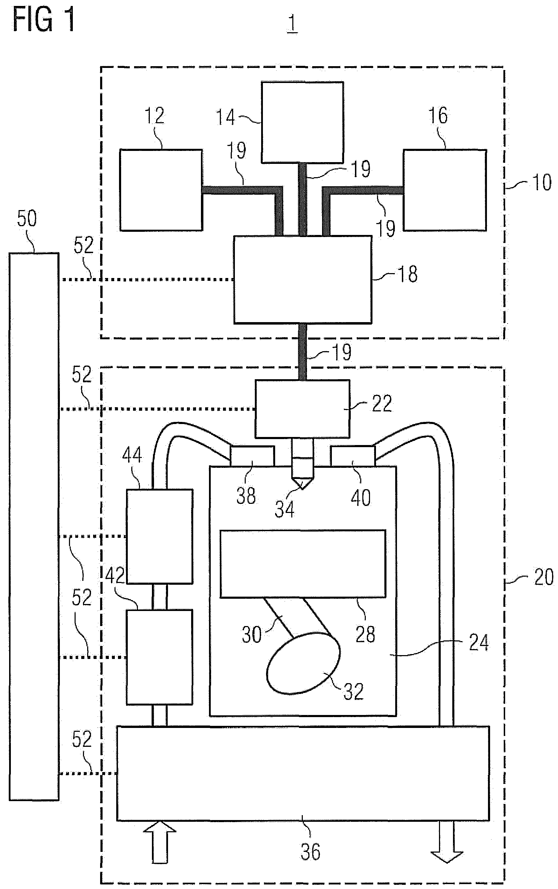

Fig. 1 shows a schematic block diagram of an internal combustion engine system 1. System 1 may include an external fuel system 10, an ICE 20, and a control system.

External fuel system 10 may include one or more tanks 12 for alternative fuel such as low cetane fuels (for example, pyrolysis oil and an ethanol based switch over fuel), one or more tanks 14 for crude oil based fuel such as diesel, HFO, and LFO, and one or more tanks 16 for additives. External fuel system 10 may include further an external fuel supply system 18 for supplying the requested type of fuel at respective conditions such as temperature and viscosity. Via fuel lines 19, external fuel supply system 18 may be fluidly connected to each of tanks 12, 14, and 16, as well as ICE 20. Fuel lines 19 are shown as bold lines in Fig. 1. External fuel supply system 18 may include a homogenizer (not shown) for homogenization of the fuels, in particular, the alternative fuels such as pyrolysis oil and/or one or more treatment units (not shown) for adjusting the fuel combustion parameters.

ICE 20 may include a combustion unit, an injection system 22 fluidly connected to external fuel system 18, and an air system.

ICE 20 may be configured to operate, for example, with pyrolysis oil and/or a mixture of the pyrolysis oil with additives such as a lubricant, mineral oil, synthetic oil, and/or natural oil. ICE 20 may further allow operation with crude oil based fuels such as diesel and HFO.

The combustion unit may provide one ore more cylinder units 24 each having a combustion chamber 26 limited by a cylinder liner (not shown), a cylinder head (not shown), and a piston 28 connected by a connecting rod 30 to a crankshaft 32.

The compression ration of combustion chamber 26 may be in the range of an epsilon value above 16, for example, in the range between 16 and 20, such as 18. An epsilon value of 18 indicates that - during the compression stroke - the volume of combustion chamber 26 is compressed by a factor of 18 when piston 28 moves from bottom dead center (BDC; lowest position of piston 28) to TDC (highest position of piston 28). To reach such an epsilon value in a standard diesel engine with an epsilon value of, for example, 16, a washer may be used to extend connecting rod 30 by several millimeters. Depending on the engine configuration and size, for example, for high speed engines and smaller engines, connecting rod 30 or piston 28 may be structurally modified to reach the required self ignition temperature.

Injection system 22 may be configured to adjust injection parameters such as an injection pressure, an injection timing, and a number and type of injections (for example, pre- and post-injections). Injection system 22 may include, for example, an injection nozzle 34 and a cam driven injection pump system (not shown) for a conventional pump-line-nozzle injection or a common rail injection system. In the latter case, the injection system 22 may further allow adjusting a rail pressure.

The cam injection pump system may be a flexible camshaft configuration as disclosed in EP 1 273 795 B1 and EP 2 136 054 A1 mentioned above and may allow adjusting the start of the fuel injection between early and late start times. Within the range of 20° to 10°, an early begin may be at 17,5° before TDC, a late begin may be at 11° before TDC.

Injection nozzle 34 may be supplied with the pressurized alternative fuel by a fuel injection pump and may be configured to spray, e.g., pyrolysis oil into combustion chamber 26.

The air system may include a single-stage or multi-stage turbocharger system 36, a high temperature (HT) cooling system (lowest coolant temperature of, for example, about 340 K) and a low temperature (LT) cooling system (lowest coolant temperature of, for example, about 310 K) as well as an inlet valve 38 and an outlet valve 40.

Turbocharger system 36 may include, for example, one or two compression stages, whereby the compressor(s) at the charge air side may be driven by turbines at the exhaust gas side.

Due to the lower exhaust gas volume flow when running an ICE with alternative fuels such as pyrolysis oil, the compressor may not be driven as strong as during operation with crude oil based fuels. Accordingly, during operation with pyrolysis oil, charge air from the ambient may be less compressed than during diesel operation and, accordingly, may be less heated by turbocharger system 36.

HT cooling system and LT cooling system may provide coolers before and/or after the compression stages of turbocharger system 36. For example, the air system may comprise - as a series in flow direction - an HT cooler 42 of HT cooling system and an LT cooler 44 of LT cooling system positioned between the last compression stage and prior inlet valve 38. Alternative cooling systems are disclosed, for example, in the European patent application EP 11 182 936 of Caterpillar Motoren GmbH & Co. KG.

To provide charge air with an increased temperature to combustion chamber 26, the cooling of the compressed charge air may be reduced. For example, only HT cooler 42 or LT cooler 44 may be operated. For example, operating only HT cooler 42 may result in a temperature of about 353 K for the compressed charge air prior charging compared to a charge air temperature of about 333 K for conventional diesel operation with both coolers active.

The number of combustion units 22 and, therefore, injection systems 22 with injection nozzles 34, and combustion chambers 26 of ICE 20 is not specifically restricted. For example, a stationary or mobile power system may include for inline configurations 6, 7, 8, or 9 combustion units 22, while a V-configuration of an ICE may include, for example, 12, 16, 18, or 20 combustion units 22.

The operation of engine system 1 may be controlled by a control system. Specifically, the control system may be configured to control operation of ICE 20 based on a required mechanical output and in some systems, a required thermal output.

The control system may include a control unit 50 and one or more control sensors (not shown) such as temperature sensors, pressure sensors, and viscosity sensors. The control sensors may be configured to measure, for example, the temperature and the pressure of the charge air and the exhaust gas at the various pressure stages as well as the temperature and the pressure of the fuel in external fuel system 10 (in particular the external fuel supply system 18) and injection system 40 and to provide those data to control unit 50. The viscosity may be measured, for example, in external fuel system 18 and/or in fuel system 22.

Control unit 50 may be a single microprocessor or plural microprocessors that may include means for controlling, among others, an operation of combustion unit 22, HT cooler 42, and LT cooler 44 as well as other components of the combustion engine, for example, valves. Control unit 50 may be a general engine control unit (ECU) capable of controlling numeral functions associated with the engine and/or its associated components. Control unit 50 may include all the components required to run an application such as, for example, a memory, a secondary storage device, and a processor such as a central processing unit or any other means known in the art for controlling the ICE and its various components. Various other known circuits may be associated with control unit 50, including power supply circuitry, signal-conditioning circuitry, communication circuitry, and other appropriate circuitry. Control unit 50 may analyze and compare received and stored data, and, based on instructions and data stored in memory or input by a user, determine whether action is required.

For example, control unit 50 may compare received values with target values stored in memory, and based on the results of the comparison, control unit 50 may transmit signals to one or more components to alter the operation status thereof.

Control unit 50 may include any memory device known in the art for storing data relating to operation of the combustion engine and its components. The data may be stored in the form of one or more maps that describe and/or relate, for example, operation of the valves to the intake air temperature downstream and upstream of a compressor and/or the temperature of the charge air entering combustion chamber 26. Each of the maps may be in the form of tables, graphs, and/or equations, and include a compilation of data collected from lab and/or field operation of the combustion engine. The maps may be generated by performing instrumented tests on the operation of the combustion engine under various operating conditions while varying parameters associated therewith. The controller may reference these maps and control operation of one component in response to the desired operation of another component.

Specifically, control unit 50 may be configured to receive inputs from the various control sensors. Using the inputs from the control sensors, control unit 50 may be configured to control - via control connections 52 - the operation of external fuel supply system 18, injection system 22, turbocharger system 36, HT cooling system, specifically HT cooler 42, and LT cooling system, specifically LT cooler 44. Control connections 52 are shown as dotted lines in Fig. 1.

For example, control unit 50 may adjust valves to block, increase, or reduce the amount of coolant directed through HT cooler 42 and/or LT cooler 44 until the desired charge air temperature has been reached.

### Industrial Applicability

The disclosed concept relates to operating an ICE with a low cetane alternative fuel such as pyrolysis oil as a self-ignition engine. Moreover, the concept may provide engine parameters that allow operating the ICE as a self-ignition engine also with crude oil based fuels such as HFO and LFO. In addition, the concept may allow operating the ICE as self-ignition engine with a specific switch over fuel that is used intermediary to avoid any mixing of crude oil based fuels and alternative fuels such as pyrolysis oil based fuels but itself is compatible to both of those fuel types.

For example, an ethanol-based fuel may consist of, based on the total volume of ethanol and castor oil, 40 to 90 % by volume ethanol and 60 to 10 % by volume castor oil, and optionally including one or more additives in a total amount of up to 3 wt.-% of the total weight of the ethanol and castor oil. [45] The ethanol may be from biological sources. The term "ethanol" as used herein and in the appended claims comprises both absolute ethanol (i.e. ethanol containing less than 0.5 % by volume water) and ethanol containing considerable amounts of water.

As a bio-oil, castor oil may be used in the present ethanol-based fuel. Caster oil is a vegetable oil obtained from castor seed of the castor plant *Ricinus communis.* Ricinoleic acid, which is the main fatty acid chain of castor oil (85 to 95 wt.-%), has a hydroxyl group at C₁₂, which provides the fatty acid chain with polar properties, promoting solubility in polar liquids like ethanol. At the same time, the remaining non-polar hydrocarbon chain of ricinoleic acid still provides sufficient non-polar character such that castor oil is miscible with non-polar liquids, like, for example, crude oil based fuels such as diesel fuel, LFO or HFO.

The ethanol content may be 40 to 80 % by volume (e.g. 45 to 65 % by volume or 45 to 55 % by volume or 48 to 52 % by volume) and the castor oil content is 60 to 20 % by volume (e.g. 55 to 35 % by volume or 55 to 45 % by volume or 52 to 48 % by volume). For economical reasons, the ethanol content of the ethanol-based fuel may be as high as possible, for example, 60 to 90 % by volume, or 70 to 90 % by volume, or 80 to 90 % by volume or 85 to 90 % by volume, in case the ethanol-based fuel is to be used for continuous (long-time) operation of an ICE, in particular a self-ignition ICE.

The ethanol-based fuel may optionally include one or more additives, for example, in a total amount of up to 3 wt.-% of the total weight of the ethanol and castor oil, preferably in a total amount of up to 2 wt.-%, in particular in a total amount of up to 1 wt.-% of the total weight of the ethanol and castor oil. Said additives may be selected from the group of additives consisting of thermal stabilizers, aging stabilizers, antioxidants, coloring agents, dyes, rust inhibitors, inhibitors of gum formation, metal deactivators, upper cylinder lubricants, friction modifiers, detergents, bacteriostatic agents, fungicides, microbiocides, and mixtures thereof.

The additives optionally included in the ethanol-based fuel may serve to improve one or more properties of the ethanol-based fuel, if considered to be necessary in view of the used engine type or any other circumstances, which require the use of additives. However, in view of environmental concerns (increased emissions), the ethanol-based fuel may be provided devoid of any additives.

Further details of an ethanol based fuel are disclosed, for example, in the above mentioned application "ETHANOL-BASED FUEL AND USE THEREOF" filed on the same day by Caterpillar Motoren GmbH & Co. KG.

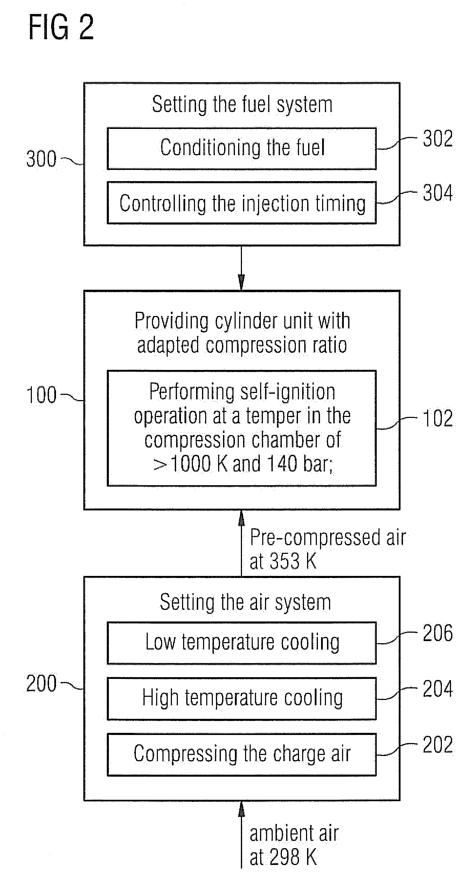

With reference to the flowchart of Fig. 2, the operation of internal combustion engine system 1 is illustrated.

Based on providing an ICE that is adapted to have a compression ration of 18 (step 100), the task may be to perform self-ignition operation of the ICE (step 102). For self-ignition of pyrolysis oil, one may want to reach a temperature in the compression chamber higher than 1000 K at, for example, 140 bar.

That temperature may be partly reached by the increased compression ratio resulting in a high compression and, therefore, high pressure in the combustion chamber at TDC.

In addition or alternatively, setting the air system parameters may increase that temperature (step 200). In particular, one may operate a turbocharger to pre-compress and, thereby, heat the charge air (step 202). At the exit of the last compressor stage, the temperature of the pre-compressed charge air may be 419 K.

Due to the differences in exhaust gas volume flow when running the ICE on crude oil based fuels and alternative fuels such as pyrolysis oil, the compressor of turbocharger system 36 may provide different degrees of pre-compression of the charge air. For example, during pyrolysis oil operation, the compressor may not be driven that strong and the charge air may be less compressed from ambient pressure (for example at 298 K) than during diesel operation and thus, may only be heated to about 419 K by turbocharger system 36.

Due to the reduced energy content of pyrolysis oil, as an example for alternative fuels, one may adapt and mechanically optimize the turbocharger. For example, one may adapt the wheels of the turbine to provide sufficient compression at the reduced exhaust gas volume stream. Alternatively or additionally, one may apply a multistage turbocharger system with, for example, a low pressure stage and a high pressure stage.

One may then reduce the temperature of the pre-compressed charge air with the cooling system, usually comprising LT and HT cooling circuits. Those systems may be used to cool the pre-compressed charge air to a minimum temperature of 353 K. For example, one may apply only (or primarily) cooling with HT cooler 42 of the HT cooling circuit (step 204). In addition, one may control the flow of the HT coolant to not cool further than the minimum temperature.

The minimum temperature may depend from the compression ratio and the type of alternative fuel as well as the timing of the injection of the alternative fuel. For example, the minimum temperature may be in the range between 340 K to 360 K.

Alternatively or additionally, one may apply cooling with the LT cooling circuit (step 206), e.g. using a limited flow of coolant through cooler 44. In some embodiments, there may not be any LT cooling required.

In addition or alternatively, setting the fuel system parameters (step 300) may increase that temperature. For example, one may condition the fuel parameters such as water content, mol-weight etc. (step 302).

Additionally or alternatively, one may adapt the injection timing (step 304). For example, to increase heating of the pyrolysis oil as an example of alternative fuels with the charge air in the compression chamber during the stroke, the pyrolysis oil may be injected earlier than HFO or DFO usually is injected during diesel operation. An early injection may be achieved, for example, by setting a flexible camshaft system in its early position such that the pyrolysis oil may be injected, for example, at an angle with the range of 20° to 10°, for example, between 17,5° and 11°, such as 17°, 16°, or 15° prior top dead center.

Using the disclosed engine operating parameters, a self igniting pyrolysis oil - charge air mixture at a temperature of at least 1000 K (for example, 1130 K for pyrolysis oil) and at, for example, 140 bar may be achieved.

Herein, the term "large internal combustion engine" may refer to internal combustion engines which may be used as main or auxiliary engines of stationary power providing systems such as power plants for production of heat and/or electricity as well as in ships/vessels such as cruiser liners, cargo ships, container ships, auxiliary ships, and tankers.

In addition, the term "internal combustion engine" as used herein is not specifically restricted and comprises any engine, in which the combustion of a fuel occurs with an oxidizer to produce high temperature and pressure gases, which are directly applied to a movable component of the engine, such as pistons or turbine blades, and move it over a distance thereby generating mechanical energy. Thus, as used herein, the term "internal combustion engine" comprises piston engines and turbines, which can, for example, be operated with alternative fuels such as pyrolysis oil.

Examples of such engines that are suitable for adaptation to alternative fuels include medium speed internal combustion diesel engines, like inline and V-type engines of the series M20, M25, M32, M43 manufactured by Caterpillar Motoren GmbH & Co. KG, Kiel, Germany, operated in a range of 500 to 1000 rpm. Moreover, the disclosed concept may be applied to two stroke engines.

Although the preferred embodiments of this invention have been described herein, improvements and modifications may be incorporated without departing from the scope of the following claims.

## Claims

1. A method for operating a self ignition internal combustion engine with a low cetane fuel, the method comprising:
providing an internal combustion engine (20) having a compression ratio of at least 17:1, for example, 18:1;
loading a combustion chamber (26) of the internal combustion engine (20) with charge air having a minimal temperature in the range of 340 K to 360 K;
injecting the low cetane fuel at an injection angle of a piston (28) of the internal combustion engine (20) within the range of 20° to 10° prior top dead center into the charge air, thereby forming a low cetane fuel - charge air mixture; and
compressing the low cetane fuel - charge air mixture further to reach a compression end temperature of at least 1000 K, thereby allowing self ignition of the low cetane fuel.

2. The method of claim 1, further comprising
prior loading the combustion chamber (26) with the charge air, pre-compressing the charge air, for example, to a pressure of at least 2 bar, for example, 2,5 bar; and
cooling the pre-compressed charge air to the minimal temperature.

3. The method of claim 2, wherein the pre-compressed charge air has a temperature within the range of 400 K to 440 K prior cooling.

4. The method of claim 2 or claim 3, wherein the cooling is performed by using primarily or only a high temperature cooler (42) of a high temperature cooling system.

5. The method of claim 4, further comprising cooling the coolant of the high temperature cooling system to a minimum temperature in a temperature range between 330 K and 370 K.

6. The method of any one of claim 1 to claim 5, wherein the injection angle is set within the range of 20° to 10°, for example within the range of 17,5° to 11° such as at an angle of 17°, 16°, and 15°, for example, using an early position setting of an injection system (22) based on a flexible camshaft technique or common rail technique.

7. The method of any one of claim 1 to claim 6, wherein the low cetane fuel has an cetane value of less then 8 and, for example, is selected from the group comprising a pyrolysis oil composition, an ethanol / bio-oil mixture, for example, an ethanol / castor oil mixture comprising 20 to 80 % by volume ethanol and 80 to 20 % by volume castor oil or an ethanol / castor oil mixture consisting of 40 to 90 % by volume ethanol and 60 to 10 % by volume castor oil, and optionally including one or more additives in a total amount of up to 3 wt.-% of the total weight of the ethanol and castor oil.

8. The method of any one of claim 1 to claim 7, wherein the piston (28) delimits the combustion chamber (26) and the method further comprises oscillating the piston (28) such that the combustion chamber (26), during a compression cycle of the internal combustion engine (20), is reduced in size by a compression ratio of at least 17:1, for example, 18:1.

9. The method of any one of claim 1 to claim 8, further comprising controlling the injection angle, the temperature of the pre-compressed charge air, and/or the pre-compression of the charge air in dependence of the type of alternative fuel and/or parameters of the ambient air.

10. A method of switching to operating a self ignition internal combustion engine with a low cetane fuel, the method comprising:
operating the internal combustion engine (20) with a crude oil based fuel and respective settings for cooling and injection timing;
switching to and operating the internal combustion engine (20) with a switch over fuel and respective settings for cooling and injection timing, until the internal combustion engine (20) is cleaned from crude oil based fuel residue; and then
switching to and operating the internal combustion engine (20) with the low cetane fuel according to the method of any one of claim 1 to claim 9.

11. The method of claim 10, further comprising
switching of or at least reducing the cooling of the pre-compressed charge air with a low temperature cooler (44) of a low temperature cooling system of the internal combustion engine (20) when switching to operating the internal combustion engine (20) with the switch over fuel and/or the alternative fuel.

12. A self-ignition internal combustion engine (20) for operation with a low cetane fuel, the self-ignition internal combustion engine (20) comprising:
a cylinder unit (24) with a piston (28) delimiting a combustion chamber (26) that, during an operation cycle of the piston (28), is reduced in size by a compression ratio of at least 17:1, for example, 18:1;
an air system configured for loading the combustion chamber (26) with charge air having a minimal temperature of at least 350 K; and
an injection system (22) configured for injecting the low cetane fuel at an injection angle of the piston (28) within the range of 20° to 10° for example, between 17,5° and 11° such as 16° prior top dead center, thereby forming a low cetane fuel - charge air mixture within the combustion chamber (26),
wherein, during operation of the elf-ignition internal combustion engine (20), a self-ignition compression end temperature of at least 1000 K for the low cetane fuel - charge air mixture is provided.

13. The self-igniting internal combustion engine of claim 12, wherein the air system comprises a turbocharger system (36) driven by the exhaust gas and pre-compressing the charge air, for example, to a pressure of at least 2 bar, for example, 2,5 bar at, for example, a temperature within the range of 400 K to 440 K prior cooling.

14. The self-igniting internal combustion engine of claim 12 or claim 13, further comprises a high temperature cooling system with a coolant operated with a minimum temperature in a temperature range between 330 K and 370 K and a high temperature cooler (42) for cooling the pre-compressed charge air.

15. An internal combustion engine system (1) comprising:
a self-ignition internal combustion engine (20) of any one of claim 12 to claim 14 and further comprising a low temperature cooling system with a coolant operated in a temperature range between 280 K and 330 K and a low temperature cooler (44) for cooling pre-compressed charge air;
an external fuel system comprising tanks (12, 14, 16) for crude oil based fuels and alternative fuels and an external fuel system for supplying one or more selected ones of the fuels to the self-ignition internal combustion engine (20); and
a control system for controlling the switching process between crude oil based fuel operation and alternative fuel operation during continuous operation of the self-ignition internal combustion engine (20) on crude oil based fuels and alternative fuels, the control system comprising a control unit (50) configured to control, during alternative fuel operation, cooling to be performed primarily or only using the high temperature cooler (42), thereby cooling the compressed charge air to a minimal temperature in the range of 340 K to 360 K, and, during fossil fuel operation, cooling to be performed using the high temperature cooler (42) and the low temperature cooler (42), thereby cooling the compressed charge air to a minimal temperature in the range of 320 K to 340 K.
